# EUROPEAN PATENT APPLICATION

(11) **EP 4 245 492 A1**
(43) Date of publication of application: **20.09.2023**
(21) Application number: 22162377.0
(22) Date of filing: 16.03.2022
(51) Int. Cl.: B28B 1/00, B28B 1/50, C04B 38/10, B33Y 10/00, B33Y 70/00

(54) **MINERAL BINDER-BASED FOAMS**

(71) Applicant: Sika Technology AG, 6340 Baar (CH)
(72) Inventor: Lootens, Didier, 8700 Küsnacht (CH); Liard, Maxime, 8050 Zürich (CH); Bourquin, Raphael, 8617 Mönchaltorf (CH); Kuhn, Patrik, 8046 Zürich (CH)
(74) Representative: Sika Patent Attorneys

(57) **Abstract**

A method for continuously producing a processable mineral binder-based foam comprises the steps of:
a) Continuously introducing at least following components into a dynamic mixing device: a curable mineral binder-based material, water and an air entraining agent;
b) Mixing the components in the dynamic mixing device in contact with a gas phase to produce a processable mineral binder-based foam; and
c) Continuously removing the processable mineral binder-based foam from the mixing device;
whereby steps a), b) and c) take place simultaneously.

## Description

### Technical field

The invention relates to a method for continuously producing a processable mineral binder-based foam. A further aspect of the invention is directed to a method for applying a mineral binder-based foam with an additive manufacturing method, especially for coating a pre-built three-dimensional object with a mineral binder-based foam and/or for producing a three-dimensional object consisting at least partly of a mineral binder-based foam.

### Background art

In construction industry, compositions based on mineral binders, such as e.g. mortar or concrete compositions, are widely used for various applications. Such compositions have a lot of advantages: they are relatively cheap, have high compressive strengths and are available worldwide.

On the other hand, mineral binder based compositions also have some drawbacks such as for example low flexural strength, large weight and poor insulating properties. The low flexural strength is generally overcome by using reinforcements, e.g. metallic rebars or fibers. Regarding thermal insulation, the thermal conductivity of concrete for example is rather high (heat conductivity λ ≈ 1.5 - 2 W/m·K) and therefore it is a very poor insulating material. This usually is overcome by adding an additional layer of insulating material, such as e.g. glass wool (λ ≈ 0.04 W/m·K) with a heat conductivity about 40 times lower than concrete.

However, the additional layer to be added brings productivity issues because an additional step is required after building the base structures and it makes recycling more complicated as concrete and glass wool must be separated after destruction.

Another solution known to improve insulating properties as well as reducing weight of mineral binder-based structures is the use of mineral binder-based foams, e.g. foamed concrete. The density and heat conductivity are known to decrease with increasing porosity of the mineral binder-based foam. Thus, mineral binder-based foams shows much better insulating properties and lower densities.

Known processes for the production of mineral binder-based foams usually are based on a two-step process: First, a foam is produced and subsequently the foam is mixed with the other concrete components, e.g. cement, aggregates and further additives. However, with such kind of two-step processes the stability of the foamed concrete is medium to low due to the mixing in the second step. Consequences are lower mechanical resistance, larger pore structures and inhomogeneous pore distributions within the foamed concrete.

Other processes for producing mineral binder-based foams are based on the incorporation of air void-forming agents in the mineral binder composition during mixing. However, these processes are difficult to control since the proportion and structure of the air-voids inter alia depend on kinetics of reactions between air void-forming agents and concrete components.

Furthermore, known processes for producing mineral binder-based foams are poorly compatible with automatic additive manufacturing techniques that nowadays are increasingly used for producing mineral binder-based structures.

Thus, there is still a need to provide improved solutions for the production of foamed mineral binder compositions.

### Disclosure of the invention

It is an object of the present invention to provide improved solutions for producing foamed mineral binder compositions. Thereby, preferably, the solutions should allow for producing foamed mineral binder composition as simple, as reproducible, as stable and/or as efficient as possible. Especially preferred, the solutions should make it possible to produce a mineral binder-based foam with a defined density in a reliable manner. In addition, preferably, the solution should be compatible with additive manufacturing techniques.

Surprisingly, it has been found that the features of claim 1 achieve this object. Thus, the core of the present invention is related to a method for continuously producing a processable mineral binder-based foam comprising the steps of:
a) Continuously introducing at least following components into a dynamic mixing device: a curable mineral binder-based material, water and an air entraining agent;
b) Continuously mixing the components in the dynamic mixing device in contact with a gas phase to produce a processable mineral binder-based foam; and
c) Continuously removing the processable mineral binder-based foam from the dynamic mixing device;
whereby steps a), b) and c) take place simultaneously.

As it turned out, the inventive method allows for producing foamed mineral binder compositions in a rather simple but efficient manner without need of additional air-void forming agents. The foam is directly produced when mixing the mineral binder-based material with water what greatly improves reproducibility and production stability when compared to know two-step methods.

The density of the foamed mineral binder compositions can be controlled reproducibly and reliably by the proportion of air entraining agent and the mixing intensity, especially the mixing speed and/or mixing time, within a wide range. Foamed mineral binder compositions produced in this manner turned out to be highly stable.

Furthermore, since the inventive method is an essentially continuous process and results in stable foams, it is highly compatible with automated additive manufacturing methods. In particular, processable foamed mineral binder compositions produced with the inventive method turned out to be rather stable against mechanical forces occurring during conveying in supply lines and extrusion in nozzles. Therefore, the inventive method is highly compatible with 3D printing methods.

In addition, the inventive method can be performed with known equipment used in additive manufacturing or 3D printing, respectively. Thus, there is no need to provide additional devices. This reduces costs and allows for easily switching between the application of foamed mineral binder compositions and ordinary mineral binder composition.

The so produced foamed mineral binder compositions can for example be used for producing lightweight structures with improved insulating properties and/or for coating prebuilt mortar or concrete structures with an additional insulating layer. In the latter case, since the foamed mineral binder compositions are based on mineral binder-based materials, it is highly compatible with pre-built mortar or concrete structures. This results in a very good adherence of the insulating layer on such kind of pre-built structures. Furthermore, recycling of such structures is easier since insulating layers as well as pre-built structures are based on highly similar components.

Additional aspects of the invention are subject of further independent claims. Particularly preferred embodiments are outlined throughout the description and the dependent claims.

### Ways of carrying out the invention

A first aspect of the present invention is directed to a method for continuously producing a processable mineral binder-based foam comprising the steps of:
a) Continuously introducing at least following components into a dynamic mixing device: a curable mineral binder-based material, water and an air entraining agent;
b) Continuously mixing the components in the dynamic mixing device in contact with a gas phase to produce the processable mineral binder-based foam; and
c) Continuously removing the processable mineral binder-based foam from the dynamic mixing device;
whereby steps a), b) and c) take place simultaneously.

A dynamic mixing device is meant to be a mixing device whereby the mixing is effected by at least one moving mixing element. In contrast, a static mixer is a mixing device without any moving mixing elements.

Steps a), b) and c) are performed continuously and simultaneously. This means that the curable mineral binder-based material, the water, the air entraining agent, and optionally one or more further components, to be mixed are continuously in motion from the introduction in step a) over step b) to the removal in step c). Thereby processable mineral binder-based foam can be produced continuously for any length of time desired. This is in sharp contrast to a batch process in which mixing usually is stopped for addition of components and removal of the mixed material.

During step b) the components in the dynamic mixing device are in contact with a gas phase, especially air. The gas phase can be introduced separately into the mixing device, it can for example be introduced together with the further components into the mixing device and/or the mixing device can have an open construction such that the components to be mixed are in direct contact with atmospheric air. The gas phase can comprises or consist of air, CO₂, N₂, O₂, and/or a noble gas. Most preferably, the gas phase consists of air.

Preferably, the pressure of the gas phase is atmospheric pressure or a pressure in the range of 0.8 - 1.2 bar. This makes it possible to perform step b) under ambient conditions.

A "curable mineral binder-based material" is meant to be a mineral binder comprising or consisting of at least one mineral binder. Especially the curable mineral binder-based material is a dry material and/or a particulate material. This material includes in particular the mineral binder, aggregates, and/or one or more further components.

A "mineral binder" is understood in the present document to refer in particular to a binder which reacts in the presence of water, in a hydration reaction, to form solid hydrates or hydrate phases. This can by way of example be a hydraulic binder, e.g. cement or hydraulic lime; a latently hydraulic binder, e.g. slag; a pozzolanic binder, e.g. fly ash; or a non-hydraulic binder, e.g. gypsum or white lime.

A "processable mineral binder-based foam" is meant to be a fluid material having pores of gas, especially air, entrapped within the mineral binder-based material after mixing with water. The pores in particular comprise gas, which was present during mixing in step b). In this state, the mineral binder is in setting state and the mineral binder-based foam is processable, i.e. it can for example be pumped through supply lines and extruded through nozzles.

Especially a proportion of gas pores is from is from 5 - 95 vol.%, especially 30 - 70 vol.%, with respect to the total volume of the processable mineral binder-based foam. The volume of gas pores can e.g. be determined according to standard EN 1015-7:1998.

In particular, the fresh density of the processable mineral binder-based foam is from 0.3 - 2.0 kg/liter, especially 0.5 - 1.5 kg/liter. The density can e.g. be measured according to standard EN 12350-5:2009.

For example, in the processable mineral binder-based foam, pores with a size of 1 - 200 µm, especially 5 - 100 µm, in particular 10 - 50 µm, are present.

The mineral binder comprised in the curable mineral binder-based material is preferably selected from the group consisting of cement, gypsum, burnt lime, slag, and fly ash, and mixtures thereof. The mineral binder composition preferably comprises at least one hydraulic binder, preferably a cementitious binder.

The hydraulic binder is preferably selected from the group consisting of Portland cement, calcium aluminate cement, calcium sulfoaluminate cement, and mixtures thereof.

The cement used may be any available cement type or a mixture of two or more cement types, examples being the cements classified under DIN EN 197-1: Portland cement (CEM I), Portland composite cement (CEM II), blast furnace slag cement (CEM III), pozzolanic cement (CEM IV), and composite cement (CEM V). Cements produced according to an alternative standard, such as the ASTM standard or the Indian standard, for example, are of course equally suitable. Particularly preferred is a cement according to DIN EN 197-1, a calcium sulfoaluminate cement, a calcium aluminate cement, or mixtures thereof, optionally in a mixture with calcium sulfate.

The most preferred is Portland cement or a cement including Portland cement according to DIN EN 197-1. Portland cement is particularly readily available and allows mortars to have good properties.

Also especially suitable are mixtures of Portland cement, calcium aluminate cement, and calcium sulfate, or mixtures of cement and calcium sulfoaluminate cement. Such binder mixtures allow short setting times and high early strengths.

The curable mineral binder-based material preferably further comprises aggregates, especially mineral aggregates. Aggregates are chemically inert, solid, particulate materials and are available in various shapes, sizes and as different materials, varying from extremely fine particles of sand to large coarse stones. All aggregates typically employed for concrete and mortar are suitable in principle.

Examples of particularly suitable fillers are rock particle size fractions, gravel, sand, especially silica sand and limestone sand, comminuted stones, calcined pebbles or lightweight fillers such as expanded clay, expanded glass, foamed glass, pumice, perlite, and vermiculite. Other advantageous aggregates are calcium carbonate, aluminum oxide, amorphous silica (silica fume), or crystalline silica (quartz flour).

The particle size is guided by the application and is situated in the range from 0.1 mm to 32 mm or more. Preference is given to mixing different particle sizes in order to provide optimum establishment of the properties of the processable mineral binder-based foam. Aggregates composed of different materials can also be mixed. The particle size may be determined by means of sieve analysis.

Preferred aggregates are those having particle sizes of not more than 8 mm, more preferably not more than 5 mm, more preferably still not more than 3.5 mm, most preferably not more than 2.2 mm.

The mineral binder composition preferably comprises aggregates of which at least 30 wt %, more preferably at least 40 wt %, most preferably at least 50 wt % are smaller than 2 mm, preferably smaller than 1 mm, more preferably smaller than 0.5 mm, based on a total amount of 100 wt % of all aggregates in the curable mineral binder-based material. Suitable aggregates of low particle size are, in particular, fine silica sands or calcium carbonate powders.

Curable mineral binder-based material having such particle sizes are readily conveyable, can be mixed well in the dynamic mixer, and result in a very uniform processable mineral binder-based foam.

There are specific applications in which aggregates having particle sizes of up to 32 mm may also be used, more preferably up to 20 mm, most preferably up to 16 mm.

Especially, the curable mineral binder-based material includes at least one additional additive and/or at least one additional additive is introduced into the mixing device in step a) and/ or to the processable mineral binder-based foam after step c).

If the at least one additional additive is introduced after step c), it might be introduced with an additional mixing device, e.g. a static and/or a further dynamic mixing device.

As for example, the at least one additional additive is a concrete admixture and/or a mortar admixture and/or process chemicals. The at least one additive more particularly comprises a wetting agent, a die, a preservative, a plasticizer, a retarder, an accelerators, a polymer, a rheological assistant, a viscosity modifier, a pumping assistant, a shrinkage reducer, or a corrosion inhibitor, or combinations thereof.

A proportion of the at least one additional additive in particular is from 0.001 - 15 wt.%, especially 0.01 - 10 wt.% with respect to the total weight of the curable mineral binder-based material.

Especially preferred, the at least one additional additive is selected from accelerators and/or plasticizers.

An accelerator comprises for example at least one compound selected from the group consisting of amino alcohols, alkali metal and alkaline earth metal nitrates, alkali metal and alkaline earth metal nitrites, alkali metal and alkaline earth metal thiocyanates, alkali metal and alkaline earth metal halides, alkali metal and alkaline earth metal carbonates, glycerol, glycerol derivatives, glycols, glycol derivatives, aluminum salts, aluminum hydroxides, alkali metal and alkaline earth metal hydroxides, alkali metal and alkaline earth metal silicates, alkali metal and alkaline earth metal oxides, crystallization nuclei, and mixtures thereof.

An accelerator is preferably metered in an amount such that processable mineral binder-based foam remains readily processable and/or shapeable for several seconds to several minutes. This allows the processable mineral binder-based foam for example to be used and optimized for additive manufacturing processes, e.g. 3D printing. This allows layers of the processable mineral binder-based foam to be applied uniformly, said layers developing a good cohesion, and the surface of the shaped body produced can, if desired, be subsequently after treated for example.

Examples of suitable plasticizers include lignosulfonates, sulfonated naphthalene-formaldehyde condensates, sulfonated melamine-formaldehyde condensates, sulfonated vinylcopolymers, polyalkylene glycols having phosphonate groups, polyalkylene glycols having phosphate groups, polycarboxylates or polycarboxylate ethers, or mixtures of the stated plasticizers; polycarboxylate ethers are understood to comprise comb polymers having anionic groups on the polymer backbone and having polyalkylene oxide side chains, the anionic groups being selected in particular from carboxylate groups, sulfonate groups, phosphonate groups, or phosphate groups.

In particular, the mineral binder-based material is introduced into the dynamic mixing device in step a) in dry form and/or in the form of a dry mortar or dry concrete composition. Thereby, the water is added into the dynamic mixing device in step a) separately from the mineral binder-based material. Further preferred, the air entraining agent, and optionally the at least one further additive, is added to the dynamic mixing device in step a) separately from the mineral binder-based material in this case too. However, they might be added together with the water.

Especially, the air entraining agent, before addition to the dynamic mixing device in step a), is premixed with the water, and optionally the at least one further additive. This allows for precisely dosing these components and a faster mixing with the other components.

However, in another preferred embodiment, the mineral binder-based material is introduced into the dynamic mixing device in step a) in wet form and/or in the form of a mortar or concrete composition premixed with water and optionally at least one further additive as described above, e.g. a plasticizer. In this case, preferably, the air entraining agent and optionally at least one further additive as described above, for example an accelerator, is added into the dynamic mixing device in step a) separately from the mineral binder-based material in wet form.

In particular, in this embodiment, the mineral binder-based material in wet form is a self-levelling material, especially a self-levelling mortar or concrete. In particular, the self-levelling material has a consistency class of at least S4, especially S5, and/or it has as slump of 160 - 210 mm, especially ≥ 220 mm, according to EN 206-1:2013 + A1 2016. This allows for conveying the mineral binder-based material in wet form in an easy and efficient manner even over long distances towards the dynamic mixing device used in step a). Only when mineral binder-based material in wet form reaches the dynamic mixing device used in step a), which for example is located on a printing head, the mineral binder-based foam is produced. This simplifies conveying of the mineral binder-based material in wet form and reduces to risk of partial collapse of the foam.

In particular, the mineral binder-based material in wet form might be premixed with an additional mixing device, e.g. a static and/or a further dynamic mixing device, before step a), which in particular is located upstream the dynamic mixing device used in step a).

Especially, the mineral binder-based material comprises a mineral binder and aggregates, especially sand. Thereby, preferably, a weight ratio of the aggregates to the mineral binder is from 5:1 - 1:2, especially 4:1 - 1.2:1.

Highly preferred, water is introduced into the mixing device with a proportion of 15 - 50 wt.%, especially 30 - 45 wt.%, in particular 35 - 45 wt.%, with respect to the total weight of the mineral binder-based material, especially the dry mineral binder-based material, introduced into the mixing device in step a). Such proportions of water turned out to be highly beneficial for producing processable mineral binder-based foams.

The air-entraining agent preferably is selected from surfactants. The term "surfactant" stands in particular for a compound that lowers the surface tension of water.

As surfactants, it is possible to use anionic, cationic, nonionic or ampholytic surfactants or mixtures thereof. For example, the air-entraining agent is selected from anionic surfactants.

Examples of anionic surfactants are surfactants containing carboxylate, sulfate, phosphate and/or sulfonate groups. E.g. the surfactants are selected from amino acid derivatives, fatty alcohol ether sulfates, fatty alcohol sulfates, soaps, alkylphenol ethoxylates, fatty alcohol ethoxylates, alkanesulfonates, olefinsulfonates and/or alkyl phosphates.

Nonionic surfactants include, for example, ethoxylates, such as, for example, ethoxylated adducts of alcohols, such as, for example, polyoxyalkylene polyols, amines, fatty acids, fatty acid amides, alkylphenols, ethanolamides, fatty amines, polysiloxanes or fatty acid esters, but also alkyl or alkylphenyl polyglycol ethers, such as, for example, fatty alcohol polyglycol ethers, or fatty acid amides, alkylglycosides, sugar esters, sorbitan esters, polysorbates or trialkylamine oxides, but also esters and amides of poly(meth)acrylic acids with polyalkylene glycols or aminopolyalkylene glycols, which at most may be tacked at one end with alkyl groups.

Examples of cationic surfactants are quaternary ammonium or phosphonium compounds, such as, for example, tetraalkylammonium salts, N,N-dialkylimidazoline compounds, dimethyldistearylammonium compounds, or N-alkylpyridine compounds, more particularly ammonium chlorides.

The ampholytic or amphoteric surfactants include amphoteric electrolytes, known as ampholytes, such as aminocarboxylic acids, for example, and betaines.

Surfactants of this kind are widely available commercially.

The air-entraining agent preferably is introduced into the mixing device in step a) with a proportion of 0.01 - 10 wt.%, especially 0.1 - 5 wt.%, in particular 0.5 - 2 wt.%, with respect to the total weight of the mineral binder-based material, especially the dry mineral binder-based material. These proportions are especially suitable for producing stable processable mineral binder-based foams with densities in the range of 0.3 - 2.0 kg/liter, especially 0.5 - 1.5 kg/liter, in particular 0.5 - 0.9 kg/liter. However, other proportions might be suitable as well for specific applications.

Especially, the dynamic mixing device of step b) comprises at least one dynamic mixing element, especially a rotatable mixing element, for mixing the components, which is operated at a speed of 500 - 2'000, especially 600 - 1'700, most preferably of 1'000 to 1'500, revolutions per minute.

The mean residence time of the components in the dynamic mixing device in step b) in particular is from 1 - 30 s, especially 5 - 20 s, in particular 10 - 15 s. The mean residence time of the binder composition in the dynamic mixing device is the average period of time for which a particle resides in the dynamic mixing device, from introduction to the removal. The mean residence time can for example be controlled by the conveying speed of the components introduced into and/or removed from the dynamic mixing device.

These parameters turned out to be ideal for obtaining stable processable mineral binder-based foams.

The dynamic mixing device preferably comprises a drum having at least one inlet and one outlet, a drive, a stirring shaft for mixing the components, said stirring shaft being arranged in the drum and being coupled to the drive. In this embodiment, the stirring shaft is a special kind of a stirring element.

In one advantageous exemplary embodiment, the stirring shaft is equipped with pegs such that, while the stirring shaft rotates, a mix in the drum is moved by the pegs. This has the advantage that, as a result, efficient and homogeneous mixing of the different components can be achieved. Furthermore, a specific arrangement and configuration of the pegs can influence both mixing and conveying of the mix in the drum.

Such stirring shafts having pegs are suitable in particular for mixing components with large grain sizes, for example grain sizes of 2 to 10 mm. These can be for example aggregates such as stones, gravel or sand. In addition, such a mixer is also suitable for mixing asymmetrical substances, for example mixes having fiber admixtures (for example carbon fibers, metal fibers or synthetic fibers).

In an alternative exemplary embodiment, the stirring shaft is not equipped with pegs but is configured for example as a helical stirrer, disk stirrer or inclined-blade stirrer.

More preferably, the dynamic mixing device is connected with a conveying device and/or it comprises a conveying device. Especially preferred, the conveying device is arranged in the drum.

In one advantageous embodiment, the conveying device is arranged in a manner directly adjoining the stirring shaft such that the mix mixed by the stirring shaft is able to be collected directly by the conveying device and is able to be conveyed out of the drum through the outlet.

This has the advantage that the processable mineral binder-based foam produced in the mixing device directly after production is conveyed out of the mixing device, what reduces compressive forces and the tendency of collapsing of the foam.

In one advantageous exemplary embodiment, the conveying device and the stirring shaft are arranged on one and the same driveshaft, wherein said driveshaft is drivable by the drive. This has the advantage of resulting in a cost-effective and robust device.

In an alternative exemplary embodiment, the conveying device and the stirring shaft are arranged on two separate driveshafts, wherein the conveying device is arranged on a first driveshaft and the stirring shaft is arranged on a second driveshaft, with the result that the conveying device and stirring shaft are drivable at different speeds. Such an arrangement has the advantage that, as a result, the mixing and conveying of the mix can be set separately from one another. In this way, for each particular purpose, optimum mixing and conveying can be achieved through a specifically adaptable mixing rate and conveying rate. For example, for a first application, slight mixing with a simultaneously high conveying rate and/or conveying at high pressure may be advantageous, and for a second application, intensive mixing with a simultaneously low conveying rate and/or conveying at low pressure may be advantageous.

In one advantageous exemplary embodiment, the stirring shaft and the conveying device are arranged next to one another in the drum, wherein the stirring shaft is arranged in a first drum section and the conveying device is arranged in a second drum section, and wherein the inlet is arranged in the first drum section and the outlet is arranged in the second drum section.

In one advantageous development, the first drum section with the stirring shaft arranged therein forms between 50% and 90%, preferably between 60% and 85%, particularly preferably between 70% and 80%, of a volume of the drum. It has been found that, as a result of such a division of the drum, an optimum mixing rate with a desired conveying rate of the mixer can be achieved.

In one advantageous exemplary embodiment, the conveying element is configured as a screw conveyor. In one advantageous development, the screw conveyor has at least one, preferably at least two turns. Such a screw conveyor has the advantage that, as a result, even highly viscous mixes can be conveyed in the drum and, in addition, can be conveyed out of the drum through the outlet at a desired pressure.

In a further advantageous development, a cross section of a shaft of the conveying device can be configured in a variable manner in the direction of the driveshaft. In this case, a volume for the mix becomes smaller toward one end of the conveying device. As a result, a conveying pressure of the conveying device can be changed depending on the orientation of the reduction in size of the volume for the mix.

In one advantageous development, more than two turns can be formed. In addition, the turns can have different extents in the direction of the driveshaft. wherein the turns become tighter toward one end of the conveying device. As a result, a conveying pressure of the conveying device can be changed depending on the orientation of the tightening of the turns.

Especially, the dynamic mixing device is connected with a feed device with which the curable mineral binder-based material, water and the air-entraining agent can be added to the mixing device, preferably independently of each other. For this, the feed device preferably has at least two, especially at least three, separate inlets configured for discharging the components individually into the dynamic mixing device. With that, the composition of the processable mineral binder-based foam can be adapted at any time and in a flexible manner.

In order to mix components together and to convey them, it is possible for only one inlet or two or more inlets to be arranged on the drum. In this case, the components can for example be combined before they are passed into the drum, or the components can be passed into the drum via separate inlets and only be mixed together once they are in the drum.

Depending on the number and arrangement of the inlets, the stirring shaft and the stirring elements arranged thereon, such as pegs, for example, can be configured differently.

In one advantageous exemplary embodiment, the drum comprises a first inlet and a second inlet, wherein a feeding device is arranged at the first inlet. The provision of such a feeding device at one of the inlets has the advantage that, as a result, pulverulent components can be fed to the feeding device in an efficient and controlled manner.

In one advantageous development, the feeding device comprises a hopper for receiving a pulverulent component, a second drive, and a second stirring shaft that is coupled thereto and arranged in the hopper. This has the advantage that, as a result, said pulverulent component can be introduced continuously into the drum of the mixer without clogging.

In one advantageous development, the second stirring shaft comprises radially arranged stirring blades, which are arranged in an input region of the hopper, and wherein the second stirring shaft has an axially oriented stirring rod which is radially offset from an axis of rotation of the stirring shaft, said stirring rod being arranged in an output region of the hopper. Such a feeding device affords the advantage that, by way of the stirring blades, the pulverulent component can be conveyed in a controlled manner through an input region of the hopper, wherein, as a result of the radially offset stirring rod, the pulverulent component is prevented from blocking the output region of the hopper. Alternatively, it is also possible for only stirring blades without a stirring rod or a stirring rod without stirring blades to be arranged on the stirring shaft.

In one advantageous embodiment, a component, which is fed to the system via the feeding device, is able to be fed via a gravimetric method. In contrast to a volumetric method, this has the advantage that, as a result, a fed mass of the one component can be set exactly, with the result that a more precise mixing result is achievable.

In one advantageous embodiment, an additional second conveying device is arranged in the drum on the same axis as the stirring shaft and the conveying device, in order to carry a first component introduced into the drum via the inlet away from the inlet before the first component is mixed with further components

In particular, the mixing in step b) is controlled such that the processable mineral binder-based foam produced has density of 0.3 - 2.0 kg/liter, especially 0.5 - 1.5 kg/liter.

Thereby, preferably, controlling of the density is effected by controlling the mixing intensity, especially the mixing speed and/or residence time of the components in the dynamic mixing device, in particular depending on the proportions of the components in the mixing device. Suitable parameters for mixing speed and residence time are described above.

The rate of production can be adjusted, e.g. by the size of the dynamic mixing device used in step b). However, for example, the processable mineral binder-based foam can e.g. be produced at a rate of 1 - 15 liters per minute, especially 4 - 10 liters per minute. Such rates are highly suitable for additive manufacturing methods.

Especially preferred, the dynamic mixing device is mounted on a movable printing head of an additive manufacturing device. In this case, the processable mineral binder-based foam can be produced shortly before applying or printing, respectively, without need for conveying the processable mineral binder-based foam through long supply lines. This reduces to risk of partial collapse of the foam during conveying.

Especially, when producing the processable mineral binder-based foam in step b), no air-void forming agent is present. An air-void forming agent in particular is includes substances that chemically react with one or more of the other components present in step b) and produces gaseous products and/or hollow particles, e.g. hollow polymeric particles.

A further aspect of the present invention is directed to a method for applying a mineral binder-based foam with an additive manufacturing method, especially with a 3D printing method, comprising the steps of:
(i) Producing a processable mineral binder-based foam as described above;
(ii) Applying the mineral binder-based foam with an additive manufacturing device, especially having a movable printing head.

The term "additive manufacturing method" or "additive manufacturing" refers to methods in which a three-dimensional object or a shaped body is produced by selective three-dimensional deposition, application and/or solidification of material.

In this process, the deposition, application and/or solidification of the material takes place in particular based on a data model of the object to be produced, and in particular in layers or sheets. In the additive manufacturing method, each object is typically produced from one or a plurality of layers. Ordinarily, an object is manufactured using a shapeless material (e.g. liquids, powders, granules, etc.) and/or a shape-neutral material (e.g. bands, wires) that in particular is subjected to chemical and/or physical processes (e.g. melting, polymerization, sintering or curing). Additive manufacturing methods are also referred to using terms such as "generative manufacturing methods" or "3D printing".

Especially, the additive manufacturing method is a method for producing a coating and/or a shaped body from the processable mineral binder-based foam, wherein the processable mineral binder-based foam is applied in at least one layer, especially in a plurality of layers. Thereby, preferably, the application is effected by means of a print head that is moveable in at least one, especially in three, spatial direction(s). In particular, the additive manufacturing method is an additive free-space method.

Thus, especially, in step (ii) a three-dimensional object consisting at least partly or completely of the mineral binder-based foam is produced.

In a special embodiment, the processable mineral binder-based foam is applied in step (ii) onto and/or into a pre-built three-dimensional object, e.g. in the form of a coating and/or as a filling.

In one advantageous embodiment, the additive manufacturing device comprises a movable printing head. More preferably, the additive manufacturing device is configured as a 3D printing device.

Especially preferred, the dynamic mixing device is mounted on a movable printing head of the additive manufacturing device. In this case, the processable mineral binder-based foam can be produced shortly before printing without need for conveying the processable mineral binder-based foam through long supply lines. This reduces to risk of partial collapse of the foam during conveying.

Preferably, the at least one additional additive as described above, e.g. an accelerator, is introduced into the mixing device in the movable printing head.

A still further aspect of the present invention is directed to a method for producing a three-dimensional object consisting partly of a mineral binder-based foam and partly of another mineral binder composition with an additive manufacturing method, comprising the steps of:
(1) temporary applying a mineral binder-based foam with an additive manufacturing method as described above, especially with the movable printing head; and
(2) temporary producing another processable mineral binder composition, which is chemically and/or physically different from the processable mineral binder-based foam and applying the other mineral binder composition, especially with the movable printing head.

Thereby, preferably, while step (1) is performed, step (2) is suspended and vice versa.

This method allows for producing a three-dimensional object consisting partly of a mineral binder-based foam and partly of a mineral binder composition with one and the same additive manufacturing device. Thereby, different sections of the three-dimensional object can be produced by switching between steps (1) and (2). This can for example be controlled based on a data model of the three-dimensional object stored in a memory of the additive manufacturing device.

In particular, the other processable mineral binder composition is produced in the same mixing device as the processable mineral binder-based foam, by introducing at least following components into the mixing device: a mineral binder and water.

Preferably, for producing the other processable mineral binder composition in step (2), a proportion of the air-entraining agent is reduced or the introduction of the air-entraining agent is suspended, while, for example, the introduction of at least the mineral binder and the water of step (1) is continued.

In particular, for producing the other processable mineral binder composition, instead of the air-entraining agent at least one of another additive is introduced into the mixing device during step (2).

Especially, for producing the other processable mineral binder composition in step (2), a proportion of water to the mineral binder is lowered when compared with the production of the processable mineral binder-based foam in step (1).

This method allows for producing a three-dimensional object consisting partly of a mineral binder-based foam and partly of a mineral binder composition.

Further advantageous configurations of the invention are evident from the exemplary embodiments.

### Brief description of the drawings

The drawings used to explain the embodiments show:
- Fig. 1: a schematic illustration of an exemplary dynamic mixing device with integrated conveying device suitable for producing processable mineral binder based foams;
- Fig. 2: a schematic illustration of a mixing device for mixing a pulverulent components and liquid components;
- Fig. 3: a schematic illustration of an exemplary additive manufacturing device with the mixing device of Fig. 1 arranged on the printing head suitable for applying processable mineral binder based foams.

### Exemplary embodiments

### Mixing devices and methods of operation

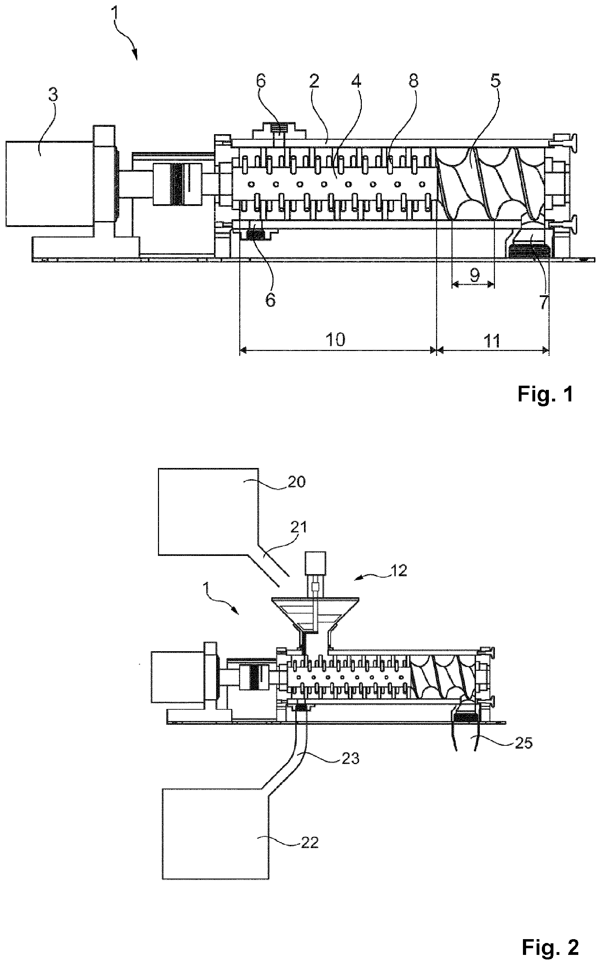

Fig. 1 illustrates an exemplary mixer 1. The mixer 1 has a drive 3, a drum 2, a stirring shaft 4, and a conveying device 5. The drum 2 in this case has two inlets 6 and one outlet 7. The inlets 6 are in this case located in a first drum section 10, in which the stirring shaft is arranged, and the outlet 7 is located in a second drum section 11, in which the conveying device 5 is also arranged.

In this exemplary embodiment, two inlets 6 are arranged on the drum 2. In an alternative exemplary embodiment, which is not illustrated, the drum 2 can for example have only one inlet, however. In this case, the components to be mixed can already be combined before they are conveyed into the drum 2 via the inlet. In other alternative embodiments, the drum can have three or more inlets for introducing three or more components to be mixed separately.

In this case, the conveying device 5 is arranged in a manner directly adjoining the stirring shaft 4 such that the mix mixed by the stirring shaft 4 is able to be collected directly by the conveying device 5 and is able to be conveyed out of the drum 2 through the outlet 7.

In this exemplary embodiment, the conveying device 5 is configured as a screw conveyor. The screw conveyor in this exemplary embodiment has two complete turns 9. Depending on the desired conveying rate, the screw conveyor can be dimensioned or configured in some other way. The conveying device 5 and the stirring shaft 4 are arranged on one and the same axis in the drum 2. In this exemplary embodiment, the stirring shaft 4 is equipped with pegs 8 such that, while the stirring shaft rotates, a mix in the drum is moved by the pegs 8.

Fig. 2 again illustrates an exemplary mixer 1 having a feeding device 12 at one of the inlets. A first component 20, and a second component 22 are continuously fed to the mixer 1 via a first feed line 21 and via a second feed line 23, respectively. For example, in this case, the first component 20 can be a pulverulent component, e.g. a curable mineral binder-based material in the form of a dry mortar composition, which is fed into the hopper of the feeding device 12 via the first feed line 21, and the second component 22 can be for example a liquid or pumpable substance, e.g. water and an air-entraining agent, which is passed directly into the drum of the mixer 1 via the second feed line 23. By introducing the pulverulent component 20, air is introduced automatically into the drum too.

During the mixing operation, the dry mortar composition is mixed with water and the air entraining agent, whereby a processable mineral binder-based foam is produced which is conveyed through the outlet 25 of the mixer by the conveying device 5.

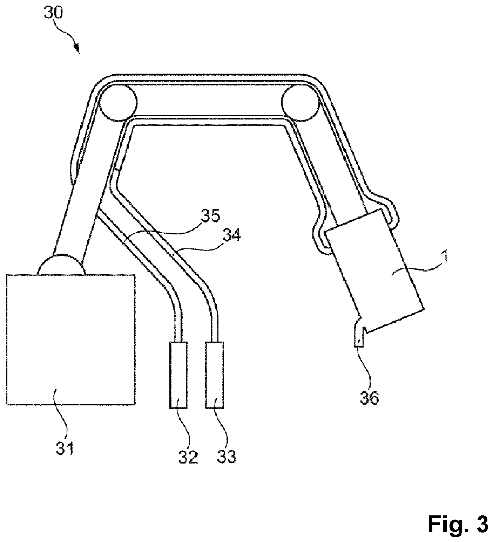

Fig. 3 illustrates an additive manufacturing device 30 for applying a mineral binder-based foam for producing a three-dimensional object consisting at least partly of a mineral binder-based foam.

The system 30 comprises a moving device 31, e.g. a robotic arm, moveable in all three spatial dimensions. At the free end of the robotic arm (right side of Fig. 3), a printing head comprising a mixer 1 as shown in Fig. 1 is arranged. The printing head furthermore comprises an outlet nozzle 36 in fluid communication with the outlet 7 of the mixer 1 for applying the mixed material, e.g. the mineral binder-based foam.

A first component 32, e.g. a dry mortar composition, and a second component 33, e.g. water and an air-entraining agent, are fed to the mixer 1 via a first feed line 34 and a second feed line 35.

### Production of mineral binder-based foams

For producing mineral binder-based foams, a dry mortar composition comprising Portland cement and sand (0 - 2 mm), water and an air entraining agent (Sika^{®} Lighcrete-400; available from Sika, Switzerland; 1 wt.% with respect to the weight of the dry mortar) were continuously introduced at a constant rate into the mixing device shown in Fig. 2 and continuously mixed. Table 1 gives an overview about the mixing parameters and the results obtained.

**Table 1**

| Exp. | Water¹⁾ | Mixing speed²⁾ | Density | | Strength⁵⁾ |
|---|---|---|---|---|---|
| | | | Fresh³⁾ | 3 days⁴⁾ | |
| E1 | 40 wt. % | 800 rpm | 0.7 | 0.59 | 0.55 MPa |
| E2 | 40 wt. % | 1'200 rpm | 0.63 | 0.52 | 0.49 MPa |
| E3 | 40 wt. % | 600 rpm | 0.91 | 0.77 | 0.73 MPa |
| E4 | 45 wt. % | 800 rpm | 0.67 | 0.58 | 0.49 MPa |
| E5 | 35 wt. % | 800 rpm | 0.75 | 0.64 | 0.60 Mpa |

| | | | | | |
|---|---|---|---|---|---|
| ¹⁾ with respect to the weight of the dry mortar composition ²⁾ rpm = revolutions per minute ³⁾ in kg/liter; measured immediately after production ⁴⁾ in kg/liter; measured 3 days after production ⁵⁾ measured with samples of 4 cm × 4 cm × 16 cm according to standard EN 12190:1998. | | | | | |

As it can be observed, the inventive method allows for producing mineral binder-based foams with fresh densities as low as 0.63 kg/liter and suitable compressive strengths. Thereby the densities can e.g. be controlled by the mixing speed and the water content. Noteworthy, the density decrease after 3 days is only about 10%. Thus, the mineral binder-based foams are quite stable.

Lower densities can e.g. be obtained by omitting the sand aggregates in the dry mortar composition or by using pure cement pastes, respectively.

### Production of a foam-based board

In a further test, a board was produced from a mineral binder-based foam as described above. The thermal properties of the board were measured using the standard heat flux method. Thereby, a heat conductivity λ = 0.13 W/m·K was derived what is similar to wood and more than 10 times lower than the heat conductivity of ordinary concrete. Thus, the inventive mineral binder-based foams can be used for insulating applications.

### Production of 3D printed elements with improved acoustic and thermal properties

In a first step, hollow elements made from ordinary cementitious mortar compositions with a density of about 2.3 kg/liter have been produced by 3D printing with a setup as shown in Fig. 3. Thereby, no air-entraining agent was used.

Subsequently, 200 kg of a mineral binder-based foam having a fresh density of 0.66 kg/liter was produced as described above. The production rate was about 5 kg foam per minute. Thereby, no fluctuations were observed during production.

The so produced foam was filled into the hollow parts of the hollow elements with the setup as shown in Fig. 3 in order to increase the acoustic properties and insulating properties of the elements. The adherence of the foam inside the hollow elements turned out to be very high.

It will be appreciated by those skilled in the art that the present invention can be embodied in other specific forms without departing from the spirit or essential characteristics thereof. The presently disclosed embodiments are therefore considered in all respects to be illustrative and not restricted.

## Claims

1. Method for continuously producing a processable mineral binder-based foam comprising the steps of:
a) Continuously introducing at least following components into a dynamic mixing device: a curable mineral binder-based material, water and an air entraining agent;
b) Mixing the components in the dynamic mixing device in contact with a gas phase to produce a processable mineral binder-based foam; and
c) Continuously removing the processable mineral binder-based foam from the mixing device;
whereby steps a), b) and c) take place simultaneously.

2. Method according to claim 1, whereby the mineral binder-based material comprises a mineral binder selected from the group consisting of Portland cement, calcium aluminate cement, calcium sulfoaluminate cement, and mixtures thereof, and optionally aggregates, especially sand.

3. Method according to any of preceding claims, whereby mineral binder-based material is introduced into the mixing device in dry form and/or in the form of a dry mortar composition.

4. Method according to any of preceding claims, whereby the water is introduced into mixing device in step a) with a proportion of 15 - 50 wt.%, especially 30 - 45 wt.%, in particular 35 - 45 wt.%, with respect to the total weight of the mineral binder-based material, especially the dry mineral binder-based material.

5. Method according to any of preceding claims, whereby the air-entraining agent is introduced with a proportion of 0.01 - 10 wt.%, especially 0.1 - 5 wt.%, in particular 0.5 - 2 wt.%, with respect to the total weight of the mineral binder-based material, especially the dry mineral binder-based material, introduced into the mixing device in step a).

6. Method according to any of preceding claims, whereby the air-entraining agent is selected from anionic surfactants, especially containing carboxylate, sulfate, phosphate and/or sulfonate groups.

7. Method according to any of preceding claims, whereby at least one additional additive is added as a further component, whereby the at least one additional additive is selected from water reducers, retarders, accelerators, plasticizers, shrinkage controlling agents, corrosion inhibitors and/or coloring substances, especially preferred, the additive is selected from accelerators and/or plasticizers.

8. Method according to any of preceding claims, whereby the mixing device comprises at least one dynamic mixing element, especially a rotatable mixing element, for mixing the components, which is operated at a speed of 500 - 2'000, especially 600 - 1'700, most preferably of 1'000 to 1'500, revolutions per minute.

9. Method according to any of preceding claims, whereby the mixing in step b) is controlled such that the processable mineral binder-based foam produced has density of 0.3 - 2.0 kg/liter, especially 0.5 - 1.5 kg/liter, in particular 0.5 - 0.9 kg/liter.

10. Method according to claim 9, whereby controlling of the density is effected by controlling the mixing intensity, especially the mixing speed and/or the mean residence time of the components in the dynamic mixing device, in particular depending on the proportions of the components in the mixing device.

11. A method for applying a mineral binder-based foam with an additive manufacturing method, especially for coating a pre-built three-dimensional object with a mineral binder-based foam and/or for producing a three-dimensional object consisting at least partly of a mineral binder-based foam, comprising the steps of:
(i) Producing a processable mineral binder-based foam according to any of preceding claims;
(ii) Applying the mineral binder-based foam with an additive manufacturing device, especially with a movable printing head.

12. Method according to claim 11, whereby the mixing device used for producing the processable mineral binder-based foam is mounted on the moveable printing head.

13. A method for producing a three-dimensional object consisting partly of a mineral binder-based foam and partly of another mineral binder composition with an additive manufacturing method, comprising the steps of:
(1) temporary applying a mineral binder-based foam with an additive manufacturing method as described in an of claims 11 - 12, especially with the movable printing head; and
(2) temporary producing another processable mineral binder composition, which is chemically and/or physically different from the processable mineral binder-based foam and applying the other mineral binder composition, especially with the movable printing head.

14. Method according to claim 13, whereby the other processable mineral binder composition is produced in the same mixing device as the processable mineral binder-based foam.

15. Method according to any of claims 13 - 14, whereby for producing the other processable mineral binder composition in step (2), a proportion of water to the mineral binder is lowered when compared with the production of the processable mineral binder-based foam in step (1).
